# NEW EUROPEAN PATENT SPECIFICATION

(11) **EP 0 435 439 B2**
(45) Date of publication and mention of the opposition decision: **20.08.1997**
(45) Mention of the grant of the patent: 02.03.1994
(21) Application number: 90312417.0
(22) Date of filing: 14.11.1990
(51) Int. Cl.: A01N 43/80

(54) **Aldehyde stabilizers for 3-isothiazolones**
Aldehydstabilisatoren für 3-Isothiazolonen
Stabilisants à groupe aldéhyde pour 3-isothiazolones

(30) Priority: 17.11.1989 US 438816; 22.10.1990 US 601964
(43) Date of publication of application: 03.07.1991
(73) Proprietor: ROHM AND HAAS COMPANY, Philadelphia Pennsylvania 19105 (US)
(72) Inventor: Willingham, Gary Lewis, Glenside, Pennsylvania 19038 (US)
(74) Representative: Angell, David Whilton

(56) References cited:
- EP-A- 0 337 624
- EP-A- 0 340 938
- DE-A- 3 144 137
- US-A- 3 849 430
- US-A- 4 048 336
- US-A- 4 165 318
- L.F. Fieser, M. Fieser: Lehrbuch der organischen Chemie, 3. Aufl. (1957), p. 209
- Bundesgesundheitsblatt, Bd. 30, Nr. 8, (August 1987), p. 283-4
- Römpp Chemie Lexikon, 9. Auflage, Band 1, 1989, S. 21, 530-1

## Description

This invention concerns the stabilization of 3-isothiazolone compounds by the incorporation with those compounds of aldehydes.

Isothiazolones have generated high commercial interest as microbicides to prevent spoilage of certain aqueous and non-aqueous products caused by microorganisms. Isothiazolones are highly effective microbicides (as used herein, "microbicides" includes bactericides, fungicides and algicides and microbicidal activity is intended to include both the elimination of and the inhibition or prevention of growth of microbial organisms such as bacteria, fungi and algae); by suitable choice of functional groups, they are useful in a broad range of applications. However, it has been long recognized that either in storage prior to addition to the substrate to be treated or after addition, their efficacy may be decreased because they are not stable under practical conditions of long-term storage. Means have thus been sought for some time to improve the stability of isothiazolones.

US-A-3,870,795 and 4,067,878 teach the stabilization of isothiazolones against chemical decomposition by addition of a metal nitrite or metal nitrate, but teach that other common metal salts, including carbonates, sulfates, chlorates, perchlorates, and chlorides are ineffective in stabilizing solutions of isothiazolones, such solutions usually being in water or in an hydroxylic solvent.

US-A-4,150,026 and 4,241,214 teach that metal salt complexes of isothiazolones are useful because they have enhanced thermal stability, while retaining biological activity.

It is known to use certain organic stabilizers for isothiazolones, generally for use situations where metal salts may create problems, such as corrosion, coagulation of latices, insolubility in non-aqueous media, interaction with the substrate to be stabilized, and the like. Formaldehyde or formaldehyde-releasing chemicals are known as stabilizers, (see US-A-4,165,318 and 4,129,448), as are certain organic chemicals such as orthoesters (EP-A-315464) and epoxides (EP-A-342852).

Grove, US-A-4,783,221 teaches blends of isothiazolones with at least one metal salt of an organic carboxylic acid having at least six carbon atoms, wherein the metal is a transition metal, zinc, mercury, antimony, or lead; and also with a solvent diluent.

In certain applications, however, it is desirable to avoid addition of organic stabilizers by virtue of their volatility, decomposition under high heat, higher cost, difficulty in handling, potential toxicity, and the like. Formaldehyde is a suspected carcinogen, and it is desirable not to use formaldehyde in applications where contact with human skin or lungs may occur.

In actual use, copper salts, such as copper sulfate, have proved efficacious in the stabilization of isothiazolones. However, copper salts may be undesirable in effluent streams in such operations as in the manufacture of stabilized isothiazolones or in their blending into a product or the use of that product. Copper salts, especially the chlorides, may contribute to possible corrosion, or in the presence of polymers in aqueous dispersion may lead to coagulation of the dispersion.

DE-A-3144137 discloses the use of isothiazolone derivatives to provide bacteriostatic activity in disinfectant compositions containing aldehydes. The minimum ratio of aldehyde to isothiazolone disclosed is 10:1, and there is nothing in the disclosure relating to the stability or otherwise of the isothiazolone.

US-A-4,539,071 discloses a combination of an isothiazolone and glutaraldehyde as a biocide, but there is no discussion in this disclosure relating to the stability of the composition. Commercial formulations of isothiazolones and N,N-methylolchloroacetamide are also known, being sold under the trademark Parmetol, but the carbonyl compound is not being employed as a stabilizer.

The present invention aims to provide a stabilization system for isothiazolones which overcomes some or all of the disadvantages outlined above, and which enables an isothiazolone to be stabilized by only low levels of stabilizer so as to avoid interference with other components in systems in which isothiazolones are used as microbicides.

Accordingly the invention provides in one aspect a method of stabilizing a 3-isothiazolone of the formula (I) 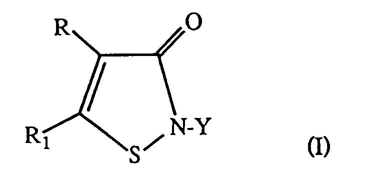 wherein
Y is (C₁-C₁₈)alkyl or (C₃-C₁₂)cycloalkyl each optionally substituted with one or more of hydroxy, halo, cyano, alkylamino, dialkylamine, arylamino, carboxy, carbalkoxy, alkoxy, aryloxy, alkylthio, arylthio, haloalkoxy, cycloalkylamino, carbamoxy, or isothiazolonyl; an unsubstituted or halo-substituted (C₂-C₈) alkenyl or alkynyl; a (C₇-C₁₀)aralkyl optionally substituted with one or more of halogen, (C₁-C₄)alkyl or (C₁-C₄)alkoxy; and an aryl optionally substituted with one or more of halogen, nitro, (C₁-C₄)alkyl, (C₁-C₄)alkyl-acylamino, carb(C₁-C₄)alkoxy or sulfamyl; and
R and R¹ is each independently H, halogen or (C₁-C₄) alkyl;
comprising incorporating therewith a (C₂-C₆) aldehyde at a weight ratio of aldehyde to isothiazolone of from 1:100 to less than 10:1.

In a further aspect the invention provides a composition comprising
a) at least one 3-isothiazolone of the formula (I) as defined above, and
b) a (C₂-C₆) aldehyde
wherein the ratio (b):(a) is less than 10:1.

In another aspect, the invention provides a method for inhibiting or preventing the growth of bacteria, fungi, yeast or algae in a locus subject or susceptible to contamination by bacteria, fungi, yeast or algae, which comprises incorporating onto or into the locus, in an amount which is effective to adversely affect the growth of bacteria, fungi, yeast, or algae, the aforementioned composition.

A further aspect of the invention provides a method for stabilising said 3-isothiazolones which comprises incorporating therewith an effective amount of an aldehyde as defined above; a different aspect of the invention is the use of said aldehydes as stabilisers for said isothiazolones.

The isothiazolones which are stabilized include those disclosed in US-A-3,523,121 and 3,761,488 and represented by the formula 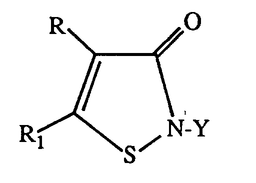 as defined above.

Preferred substituents for Y are substituted or unsubstituted (C₁-C₁₈) alkyl or (C₃-C₁₂) cycloalkyl; R is preferred to be H, Me or Cl; and R¹ is preferred to be H or Cl. Representative of such preferred Y substituents are methyl, ethyl, propyl, isopropyl, butyl, hexyl, octyl, cyclohexyl, benzyl, 3,4-dichlorobenzyl, 4-methoxybenzyl, 4-chlorobenzyl, 3,4-dichlorophenyl, 4-methoxyphenyl, hydroxymethyl, chloromethyl, chloropropyl, hydrogen, and the like.

Particularly preferred isothiazolones are 5-chloro-2-methyl-3-isothiazolone, 2-methyl-3-isothiazolone, 2-n-octyl-3-isothiazolone, 4,5-dichloro-2-cyclohexyl-3-isothiazolone and 4,5-dichloro-2-octyl-3-isothiazolone.

Most preferred is 5-chloro-2-methyl-3-isothiazolone, either as a sole compound or in admixture with 2-methyl-3-isothiazolone. When in admixture, the preferred ratio of monochlorinated/unchlorinated isothiazolone is from about 70:30 to about 85:15, and an especially preferred ratio is from about 70:30 to about 80:20. A second especially preferred isothiazolone is 2-methyl-3-isothiazolone in combination with low levels of 5-chloro-2-methyl-3-isothiazolone, a preferred ratio being from about 98:2 to about 96:4, and an especially preferred ratio being about 97:3.

The aldehyde compounds may possess other functionality such as a halogen substituent in addition to the carbonyl group. It will also be appreciated that aldehyde compounds may exist in the form of salts which can be equally active as stabilizers, and accordingly the present invention is intended to cover the claimed compounds when they exist as salts. Preferred aldehyde compounds are (C₂-C₄) aldehydes. Particularly preferred specific compounds include crotonaldehyde and acetaldehyde.

Some carbonyl compounds are known to have microbicidal activity, although their efficacy as stabilizers of isothiazolones has not previously been appreciated. Such compounds will be particularly desirable to use as stabilizers.

The composition may contain from about 0.01 to about 99.9999 parts of the one or more isothiazolones, and from about 0.0001 to about 99.9 parts of the aldehyde compound.

Generally, the composition of the invention will be in the form of a solution. Typical formulation ranges are illustrated in the following Table (all percentages are parts by weight) for both a concentrated solution of the isothiazolone and a dilute solution. For certain uses, such as shipping of large quantities, more concentrated solutions may also be utilized.

| FORMULATIONS TABLE | | |
|---|---|---|
| Isothiazolone (I, Supra) | Aldehyde Compound | Solvent |
| 0.01 -99.9999% | 0.0001- 99.99% | 0 - 99.9899% |

| Preferred | | |
|---|---|---|
| 0.1-50% | 0.01-20% | 30-99.89% |

Solvents may be used to dissolve the isothiazolones and may be any organic solvent which dissolves the isothiazolones, is compatible with the proposed end use, does not destabilize the isothiazolone, and does not react with the aldehyde compound to eliminate its stabilizing action.

Hydroxylic solvents, for example, polyols, such as glycols, alcohols and the like, may be used. Under conditions of high dilution and high ratios of stabilizer to isothiazolone, glycols may be successfully used. In certain formulations, hydrocarbons, either aliphatic or aromatic, are useful solvents.

Preferred solvents are capped polyols, wherein the free hydroxyl group is replaced with an ether or ester function. Especially preferred are 2,5,8,11-tetraoxdoadecane, commonly known as triethylene glycol dimethyl ether, and 4,7-dioxaundecanol-1 acetate, commonly known as diethylene glycol butyl ether acetate.

Water is a solvent for certain of the preferred isothiazolones and the aldehyde compound may be employed in aqueous formulations.

The amounts of aldehyde compound employed will vary depending on use conditions and concentrations of the isothiazolone in the mixture: effective amounts of aldehyde compounds based on isothiazolone maybe ratios in the range of from about 1:100 to less than 10:1, preferably from 1:50 to less than 10:1 and more preferably from 1:1 to less than 10:1 stabilizer to isothiazolone. In concentrated solutions, ratios are generally from about 1:50 to about 50:1. Obviously higher amounts may be used, but at additional cost. At high levels of dilution of the isothiazolone (such as from 1 to 10,000 ppm isothiazolone in the solvent), the ratio of stabilizer to isothiazolone can range from about 1:10 to about 20:1. The preferred range is from 1:1 to 20:1.

The stabilization advantages of the aldehyde compounds of the present invention are noted even when the isothiazolone contains other salt stabilizers such as are recorded in US-A-3,870,795, 4,067,878, 4,150,026 and 4,241,214.

It is known in the art that the performance of microbicides may be enhanced by combination with one or more other microbicides. Thus, other known microbicides may be combined advantageously with the composition of this invention.

Uses of these new organically stabilized microbicides are typically at any locus subject to contamination by bacteria, fungi, yeast or algae. Typical loci are in aqueous systems such as water cooling, laundry wash water, oil systems such as cutting oils, oil fields and the like where microorganisms need to be killed or where their growth needs to be controlled. However these stabilized microbicides may also be used in all applications for which known microbicidal compositions are useful; preferred utilities of the compositions are to protect wood paint, adhesive, glue, paper, textile, leather, plastics, cardboard, lubricants, cosmetics, food, caulking, feed and industrial cooling water from microorganisms.

The following lists typical industries and applications of compositions:

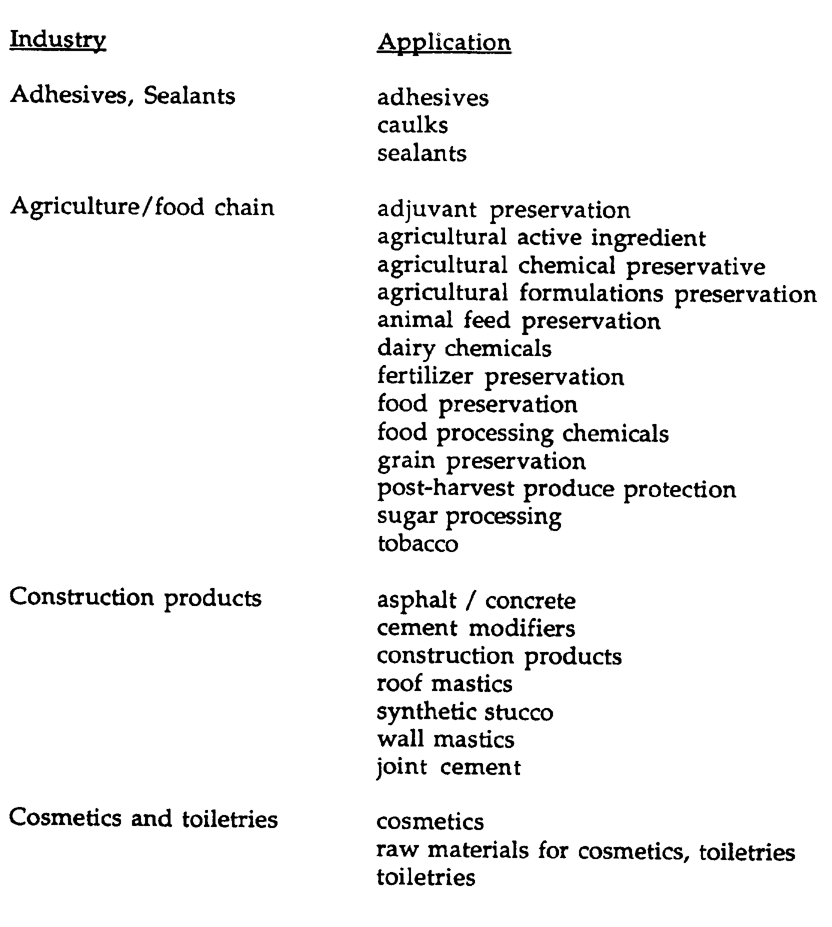

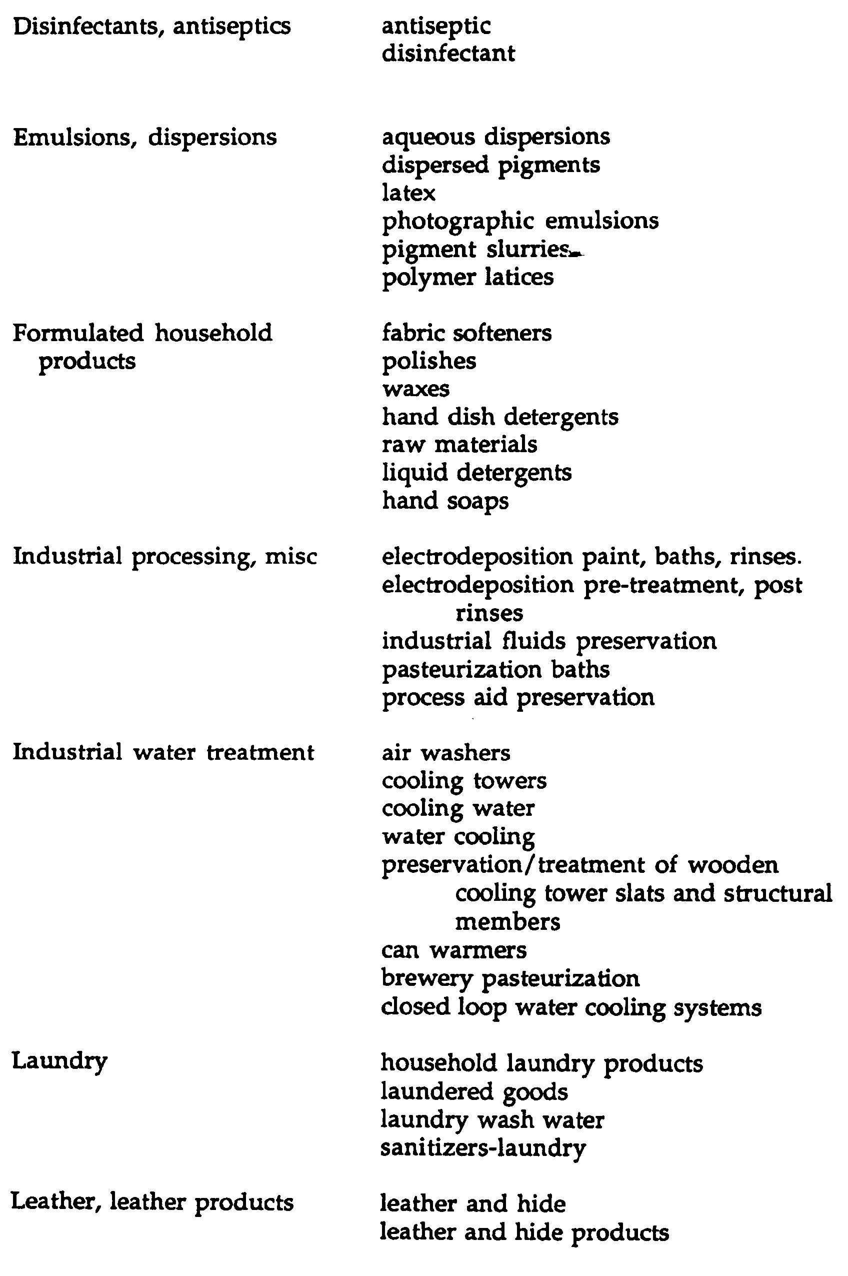

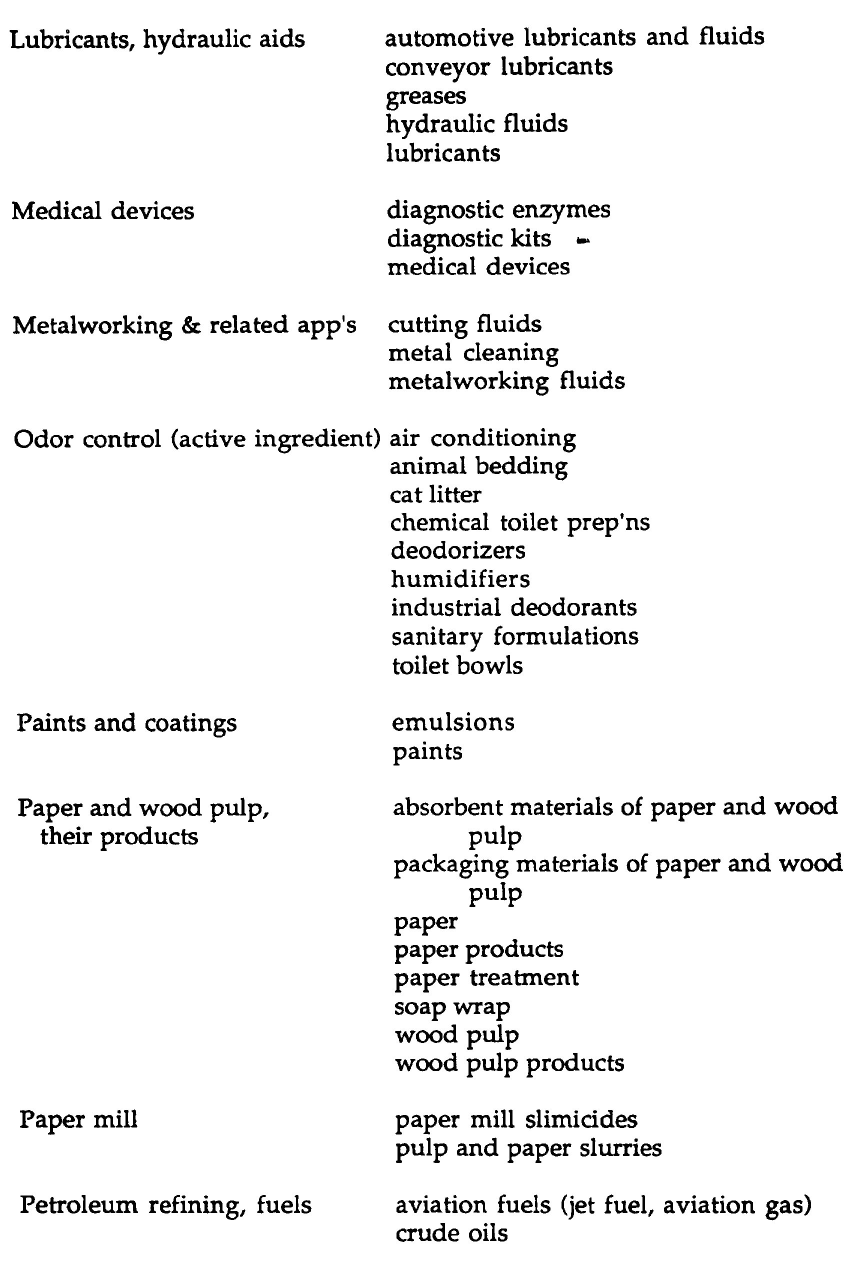

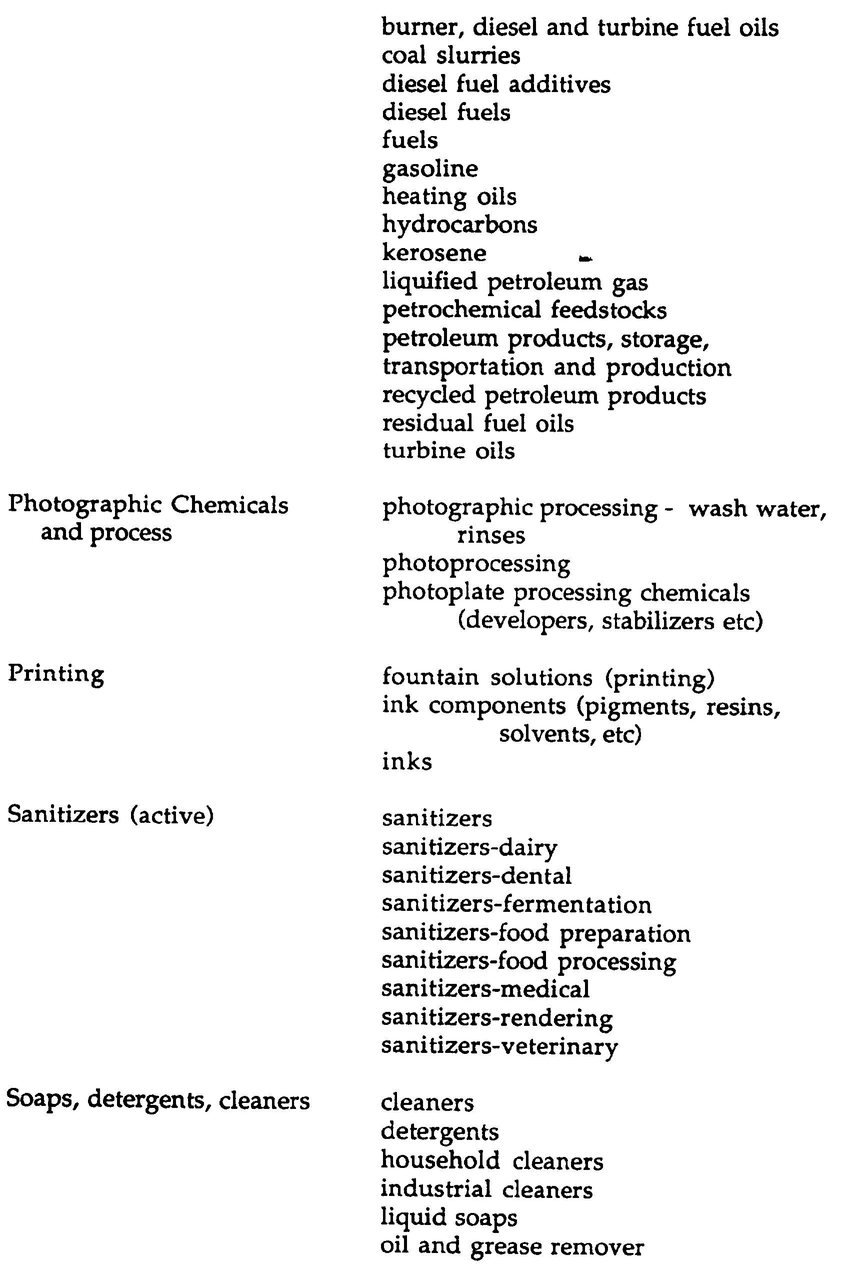

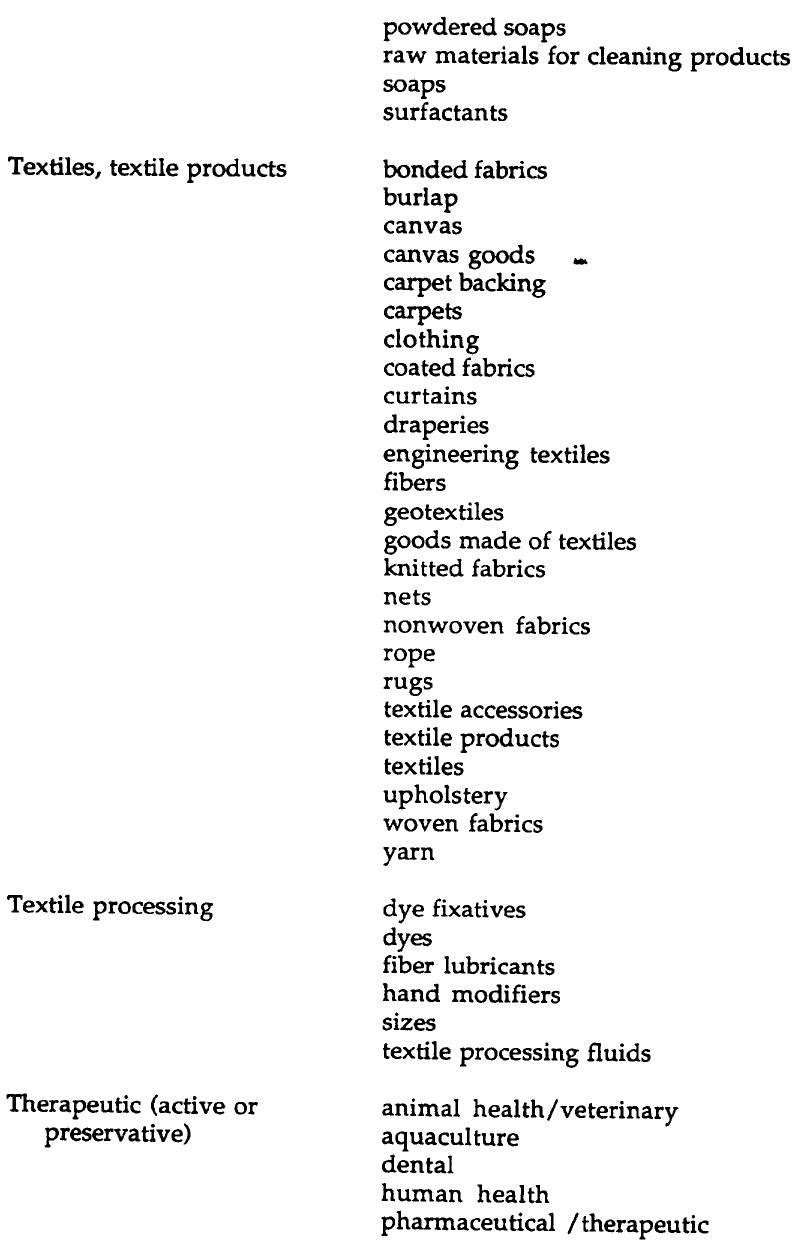

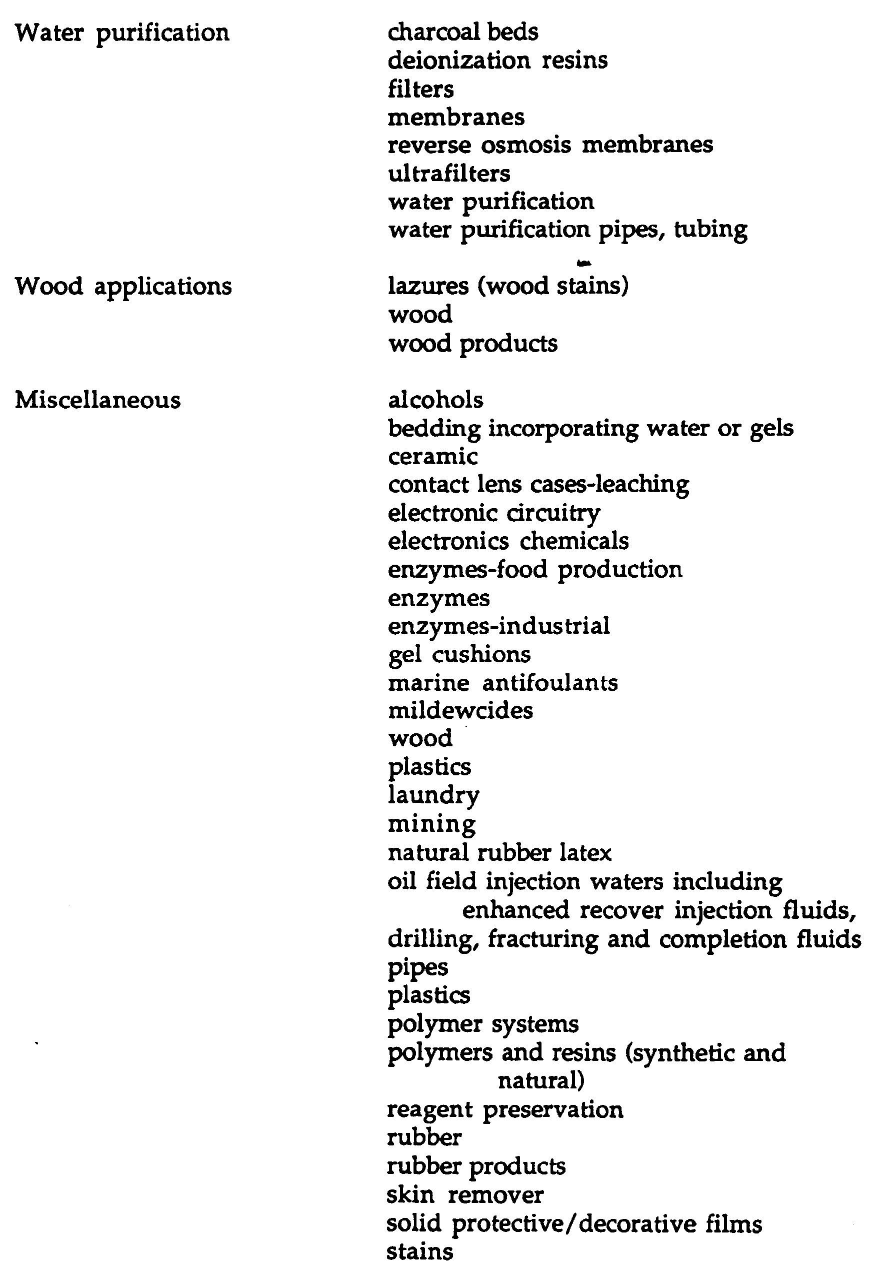

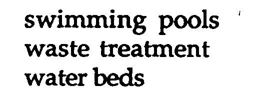

Because isothiazolones are so active as microbicides and only low levels of aldehyde compounds are required to achieve stabilization, the amount of aldehyde compound in systems being treated will be very small, and therefore it is not likely to interfere with other components in systems requiring protection or with systems to which the protected systems will be applied. Potential areas of general application include metal-working fluids, cooling water, and air washers.

One significant area of application for the compositions of the invention is as microbicides in metal working fluids. Metal working fluids are proprietary combinations of chemicals, which may contain, inter alia, ingredients such as alkanolamines, petroleum sulfonate surfactants, oils (naphthenic, paraffinic, etc.), chlorinated paraffins and fatty esters, sulfurized fatty compounds, phosphate esters, fatty acids and their amine salts, glycols, polyglycols, boric acid esters and amides. They are utilized in the milling, machining, drilling, and other processing technologies for fabricating metal for the purposes of lubricating, cooling, preventing surface corrosion, and the like. They are sold in the form of active metal working fluid (MWF) concentrates, and are diluted in use to 1-10% active ingredients in water.

Because metal working fluids are recycled and stored, the growth of microorganisms is favored. Isothiazolones have been found effective in preventing the growth of such organisms. Certain of the components in the metal working fluids will tend to destroy the isothiazolone and so remove its microbicidal protective activity, so that stabilizers for the isothiazolone against such degradation are desirable.

The following examples are intended to illustrate the present invention and not to limit it except as it is limited by the claims. All percentages are by weight unless otherwise specified, and all reagents are of good commercial quality unless otherwise specified. Methods for quantitative determination of the isothiazolones in the following examples in metal-working fluids are described in detail in "Kathon® 886 MW Microbicide and Kathon® 893 MW Fungicide: Analysis in Metalworking Fluids by High-Performance Liquid Chromatography", 1988, Rohm and Haas Company.

### EXAMPLE 1

This example demonstrates the stabilizing effect of aldehyde compounds for isothiazolones added to several different metal working fluids (MWF). MWF concentrates A and B were "semi-synthetic" types having about 10 to 15 percent naphthenic/paraffinic oil, about 50 percent water, emulsifying agents, pH adjusting amines, anticorrosive agents, and EP (extreme pressure) agents.

Into a glass vial in the following order were placed: a) 5 parts by weight of the MWF concentrate solution, b) 5 parts of the stabilizer in solution or dispersion, c) 5 parts water, d) 5 parts of an aqueous solution containing 80 ppm active ingredient (AI), prepared by dilution of a 14.4% aqueous solution of an approximately 75/25 mixture of 5-chloro-2-methyl-3-isothiazolone and 2-methyl-3-isothiazolone, the former being considered the active ingredient for these purposes; also present was 9.2 % magnesium chloride and 15.7% magnesium nitrate. Thus the final mixture contained 3-5% of the MWF concentrate, 15 ppm active ingredient of the isothiazolone, and 0 (control) to 1,000 ppm of the stabilizer.

The vials were then capped, stored at ambient room temperature in a dosed cabinet for a designated time, filtered through a 0.45 micron filter into another vial and analyzed the same day. The relative concentration of the active ingredient was determined by reverse phase high pressure liquid chromatography, utilizing a Varian model 5500 chromatograph and an ultraviolet detector.

This example demonstrates the stabilizing effect of several aldehyde compounds on a commercial MWF after 4 days at room temperature. Testing was as described above. In the absence of the MWF, the relative concentration of the AI remained at 100%.

**TABLE 1**

| MWF A STABILIZED WITH ALDEHYDE COMPOUNDS AGED 4 DAYS Original system contained 15 ppm 5-chloro-2-methyl-3-isothiazolone (AI) with 3% MWF concentrate A in water. All stabilizers were added at 1000 ppm. | |
|---|---|
| Stabilizer | % AI remaining |
| None | 3 |
| crotonaldehyde | 63 |

| Comparative | |
|---|---|
| methyl crotonate | 9 |
| crotononitrile | 6 |
| 3-penten-2-one | 4 |
| succinamide | 6 |
| succinonitrile | 4 |

### EXAMPLE 2

This example illustrates the ability of aldehyde compounds to stabilize isothiazolone in the presence of typical formulations used for water treatment in cooling towers.

A synthetic cooling tower water was prepared by adding 466.4 mg sodium carbonate into a liter of deionized water. The pH was adjusted to 9.0 using concentrated hydrochloric add. Into the solution was added 10.7 ml scale/corrosion inhibitor stock solution (Acrysol QR 1086, Bahibit AM, and Cobratec TT-50-S), then 160 mg CaCl₂·2H₂O and 122 mg MgCl₂·6H₂O. The final solution was adjusted to pH 9.0 with hydrochloric acid.

The synthetic water contained 170 ppm hardness as CaCO₃, 440 ppm alkalinity as CaCO₃, 5 ppm Acrysol® QR 1086, 5 ppm Bahibit™ AM (Phosphonate), and 2 ppm Cobratec® TT-50-S (Tolyltriazole). The hardness was 160 ppm CaCl₂·2H₂O and 122 ppm MgCl₂·6H₂O.

Isothiazolone was added at 5 ppm AI and incubated for 10 days at room temperature. AI analysis was done as described in Example 1. Results are given in Table 2.

**TABLE 2**

| COMPARISON OF ALDEHYDE STABILIZERS IN COOLING TOWER WATER AFTER 10 DAYS AT ROOM TEMPERATURE | | |
|---|---|---|
| Stabilizer | Stabilizer Level (ppm) | % AI Remaining |
| None | 0 | 40 |
| crotonaldehyde | 50 | 40 |
| crotonaldehyde | 25 | 40 |

### EXAMPLES 3-4

These examples illustrate the stabilizing effect of aldehyde compounds for isothiazolones in metalworking fluids. Tests were run as described for Example 1. Results are given in Tables 3 and 4.

**TABLE 3**

| 11.25 ppm AI, 300 ppm stabilizer, 2 days at room temperature, a synthetic metalworking fluid (MWF-A) | |
|---|---|
| Stabilizer | % AI remaining |
| None | 50 |
| Acetaldehyde | 67 |

**TABLE 4**

| 15 ppm AI, 1000 ppm stabilizer, 3 days at room temperature, MWF-A | |
|---|---|
| Stabilizer | % AI remaining |
| None | 23 |
| Furfuraldehyde | 55 |

## Claims

1. A method of stabilizing a 3-isothiazolone of the formula (I) 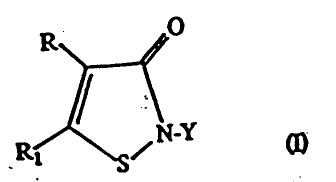 wherein
Y is (C₁-C₁₈)alkyl or (C₃-C₁₂)cycloalkyl each optionally substituted with one or more of hydroxy, halo, cyano, alkylamino, dialkylamine, arylamino, carboxy, carbalkoxy, alkoxy, aryloxy, alkylthio, arylthio, haloalkoxy, cycloalkylamino, carbamoxy, or isothiazolonyl; an unsubstituted or halo-substituted (C₂-C₈)alkenyl or alkynyl; a (C₇-C₁₀)aralkyl optionally substituted with one or more of halogen, (C₁-C₄)alkyl or (C₁-C₄)alkoxy; and an aryl optionally substituted with one or more of halogen, nitro, (C₁-C₄)alkyl, (C₁-C₄)alkyl-acylamino, carb(C₁-C₄)alkoxy or sulfamyl; and
R and R¹ is each independently H, halogen or (C₁-C₄) alkyl;
comprising incorporating therewith a (C₂-C₆) aldehyde at a weight ratio of aldehyde to isothiazolone of from 1:100 to less than 10:1.

2. Use of a (C₂-C₆) aldehyde to stabilise a 3-isothiazolone as defined in claim 1.

3. Composition comprising
a) at least one 3-isothiazolone of the formula (I) as defined in claim 1, and
b) a (C₂-C₆) aldehyde
wherein the ratio (b):(a) is less than 10:1.

4. Composition according to claim 3, additionally comprising a polyol solvent.

5. Composition according to claim 3 or 4 wherein the total amount of 3-isothiazolone is from 0.01 to 99.9999%, preferably from 0.1 to about 50% by weight, and the C₂-C₆ aldehyde compound is present in an amount from 0.0001 to 99.99%, preferably from 0.01 to about 50% by weight, based on the total weight of the composition.

6. Method, use or composition according to any preceding claim wherein the aldehyde comprises a (C₂-C₄)aldehyde.

7. Method, use or composition according to any preceding claim wherein the aldehyde comprises crotonaldehyde or acetaldehyde.

8. Method, use or composition according to any preceding claim wherein said 3-isothiazolone is 5-chloro-2-methyl-3-isothiazolone, 2-methyl-3-isothiazolone, 2-n-octyl-3-isothiazolone, 4,5-dichloro-2-cyclohexyl-3-isothiazolone, or 4,5-dichloro-2-octyl-3-isothiazolone; preferably a mixture of 5-chloro-2-methyl-3-isothiazolone and 2-methyl-3-isothiazolone.

9. Composition or method according to claim 1 or any one of claims 3 to 8, wherein the ratio of aldehyde compound to total 3-isothiazolone present is from 1:100 to less than 10:1, preferably from 1:50 to less than 10:1, and more preferably from 1:1 to less than 10:1.

10. Use according to any one of claims 2 or 6 to 8 wherein the ratio of aldehyde to total 3-isothiazolone present is from 1:50 to 50:1, preferably from 1:1 to 20:1.

11. Method of inhibiting or preventing the growth of bacteria, fungi or algae in a locus subject or susceptible to contamination thereby, comprising incorporating into or onto the locus a composition according to any of claims 3 to 9 in an amount effective to adversely affect the growth of said bacteria, fungi or algae.

12. Method according to claim 11 wherein the locus is a metal-working fluid, a cutting oil, a water-cooling system, a cosmetic formulation, a paint, or a film-forming agent.

## Patentansprüche

1. Verfahren zum Stabilisieren eines 3-Isothiazolons der Formel (I) 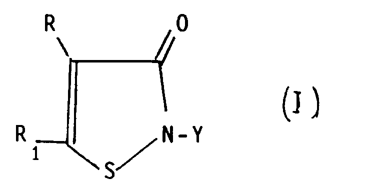 in der Y (C₁-C₁₈)-Alkyl oder (C₃-C₁₂)-Cycloalkyl, jeweils gegebenenfalls substituiert mit einem oder mehreren von Hydroxy, Halogen, Cyano, Alkylamino, Dialkylamin, Arylamino, Carboxy, Carbalkoxy, Alkoxy, Aryloxy, Alkylthio, Arylthio, Haloalkoxy, Cycloalkylamino, Carbamoxy oder Isothiazolonyl, ein nichtsubstituiertes oder halogensubstituiertes (C₂-C₈)-Alkenyl oder Alkynyl, ein (C₇-C₁₀)-Aralkyl, gegebenenfalls substituiert mit einem oder mehreren von Halogen, (C₁-C₄)-Alkyl oder (C₁-C₄)-Alkoxy; und Aryl, gegebenenfalls substituiert mit einem oder mehreren von Halogen, Nitro, (C₁-C₄)-Alkyl, (C₁-C₄)-Alkylacylamino, Carb(C₁-C₄)-Alkoxy oder Sulfamyl, ist und R und R¹ jeweils unabhängig H, Halogen oder (C₁-C₄)-Alkyl sind,
**gekennzeichnet durch**
Hinzufügen eines (C₂-C₆)-Aldehyds in einem Gewichtsverhältnis Aldehyd:Isothiazolon von 1:100 bis zu kleiner als 10:1.

2. Verwendung eines (C₂-C₆)-Aldehyds zum Stabilisieren eines 3-Isothiazolons, wie es in Anspruch 1 angegeben ist.

3. Zusammensetzung, enthaltend
a) mindestens ein 3-Isothiazolon der Formel (I), wie sie in Anspruch 1 angegeben ist, und
b) ein (C₂-C₆)-Aldehyd
wobei das Verhältnis (b):(a) kleiner als 10:1 beträgt.

4. Zusammensetzung nach Anspruch 3,
**dadurch gekennzeichnet**,
daß sie zusätzlich ein Polyollösemittel enthält.

5. Zusammensetzung nach Anspruch 3 oder 4,
**dadurch gekennzeichnet**,
daß die Gesamtmenge von 3-Isothiazolon von 0,01 bis 99,9999 Gew.-%, vorzugsweise von 0,1 bis etwa 50 Gew.-%, beträgt und der C₂-C₆-Aldehyd in einer Menge von 0,0001 bis 99,99 Gew.-%, vorzugsweise von 0,01 bis etwa 50 Gew.-%, bezogen auf Gesamtgewicht der Zusammensetzung, vorhanden ist.

6. Verfahren, Verwendung oder Zusammensetzung nach einem der vorstehenden Ansprüche,
**dadurch gekennzeichnet**,
daß der Aldehyd ein (C₂-C₄)-Aldehyd ist.

7. Verfahren, Verwendung oder Zusammensetzung nach einem der vorstehenden Ansprüche,
**dadurch gekennzeichnet**,
daß der Aldehyd Crotonaldehyd oder Acetaldehyd ist.

8. Verfahren, Verwendung oder Zusammensetzung nach einem der vorstehenden Ansprüche,
**dadurch gekennzeichnet**,
daß das 3-Isothiazolon 5-Chlor-2-methyl-3-isothiazolon, 2-Methyl-3-isothiazolon, 2-n-Octyl-3-isothiazolon, 4,5-Dichlor-2-cyclohexyl-3-isothiazolon oder 4,5-Dichlor-2-octyl-3-isothiazolon, vorzugsweise eine Mischung von 5-Chlor-2-methyl-3-isothiazolon und 2-Methyl-3-isothiazolon ist.

9. Zusammensetzung nach Anspruch 1 oder einem der Ansprüche 3 bis 8,
**dadurch gekennzeichnet**,
daß das Verhältnis von Aldehydverbindung:insgesamt vorhandenem 3-Isothiazolon von 1:100 bis zu kleiner als 10:1, vorzugsweise von 1:50 bis zu kleiner als 10:1, und besonders bevorzugt von 1:1 bis zu kleiner als 10:1 beträgt.

10. Verwendung nach einem der Ansprüche 2 oder 6 bis 8,
**dadurch gekennzeichnet**,
daß das Verhältnis von Aldehyd:insgesamt vorhandenem 3-Isothiazolon von 1:50 bis 50:1, vorzugsweise von 1:1 bis 20:1, beträgt.

11. Verfahren zum Hemmen oder Verhindern des Wachstums von Bakterien, Pilzen oder Algen an einem Ort, der damit verunreinigt oder empfindlich für eine solche Verunreinigung ist, durch Einbringen in oder auf den Ort einer Zusammensetzung nach einem der Ansprüche 3 bis 9 in einer wirksamen Menge, um das Wachstum der Bakterien, Pilze oder Algen gegenteilig zu beeinflussen.

12. Verfahren nach Anspruch 11,
**dadurch gekennzeichnet**,
daß der Ort eine Metallbearbeitungsflüssigkeit, ein Schneidlöl, ein Wasserkühlsystem, eine kosmetische Zubereitung, eine Farbe oder ein filmbildendes Mittel ist.

## Revendications

1. Procédé de stabilisation d'une 3-isothiazolone de formule (I) 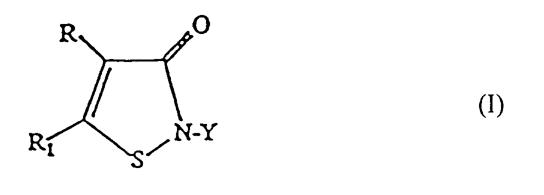 dans laquelle
Y est un groupe alkyle en C₁-C₁₈ ou un groupe cycloalkyle en C₃-C₁₂, chacun éventuellement substitué par un ou plusieurs groupes hydroxy, halo, cyano, alkylamino, dialkylamino, arylamino, carboxy, carbalcoxy, alcoxy, aryloxy, alkylthio, arylthio, haloalcoxy, cycloalkylamino, carbamoxy, ou isothiazolonyles; un groupe alcényle ou alkynyle en C₂-C₈ substitué par un groupe halo ou non substitué; un groupe aralkyle en C₇-C₁₀ éventuellement substitué par un ou plusieurs groupes halogènes, groupes alkyles en C₁-C₄ ou alcoxy en C₁-C₄; et un groupe aryle éventuellement substitué par un ou plusieurs groupes halogènes, groupe nitro, alkyles en C₁-C₄, alkyle en C₁-C₄-acylamino, carbalcoxy en C₁-C₄ ou sulfamyles; et
R et R₁ sont chacun indépendamment l'hydrogène, un groupe halogène ou un groupe alkyle en C₁-C₄;
comprenant le fait d'associer celle-ci avec un aldéhyde en C₂-C₆ selon un rapport pondéral entre l'aldéhyde et l'isothiazolone de 1:100 à moins de 10:1.

2. Utilisation d'un aldéhyde en C₂-C₆ pour stabiliser une 3-isothiazolone telle que définie dans la revendication 1.

3. Composition comprenant
a) au moins une 3-isothiazolone de formule (I) telle que définie dans la revendication 1, et
b) un aldéhyde en C₂-C₆
dans laquelle le rapport (b):(a) est inférieur à 10:1.

4. Composition selon la revendication 3, comprenant en outre un solvant de type polyol.

5. Composition selon la revendication 3 ou 4 dans laquelle la quantité totale en 3-isothiazolone est de 0,01 à 99,9999%, de préférence de 0,1 à environ 50% en poids, et le composé de type aldéhyde en C₂-C₆ est présent à raison de 0,0001 à 99,99%, de préférence de 0,01 à environ 50% en poids, sur la base du poids total de la composition.

6. Procédé, utilisation ou composition selon l'une quelconque des revendications précédentes dans lequel le composé de type aldéhyde est un aldéhyde en C₂-C₄.

7. Procédé, utilisation ou composition selon l'une quelconque des revendications précédentes dans lequel le composé de type aldéhyde est un crotonaldéhyde ou un acétaldéhyde.

8. Procédé, utilisation ou composition selon l'une quelconque des revendications précédentes dans lequel ladite 3-isothiazolone est une 5-chloro-2-méthyl-3-isothiazolone, une 2-méthyl-3-isothiazolone, une 2-n-octyl-3-isothiazolone, une 4,5-dichloro-2-cyclohexyl-3-isothiazolone, ou une 4,5-dichloro-2-octyl-3-isothiazolone; de préférence un mélange d'une 5-chloro-2-méthyl-3-isothiazolone et d'une 2-méthyl-3-isothiazolone.

9. Composition ou procédé selon la revendication 1 ou l'une quelconque des revendications 3 à 8 dans laquelle le rapport entre le composé de type aldéhyde et la quantité totale en 3-isothiazolone présente est de 1:100 à moins de 10:1, de préférence de 1:50 à moins de 10:1, et de manière plus préférentielle de 1:1 à moins de 10:1.

10. Utilisation selon l'une quelconque des revendications 2 ou 6 à 8 dans laquelle le rapport entre le composé de type aldéhyde et la quantité totale en 3-isothiazolone présente est de 1:50 à 50:1, de préférence de 1:1 à 20:1.

11. Procédé pour inhiber ou prévenir la croissance de bactéries, de champions ou d'algues dans un environnement soumis ou prédisposé à une contamination par ceux-ci, comprenant le fait d'incorporer dans ou sur cet environnement une composition selon l'une quelconque des revendications 3 à 9 dans une quantité efficace pour influer de maitière défavorable sur la croissance desdites bactéries, desdits champignons ou desdites algues.

12. Procédé selon la revendication 11, dans lequel l'environnement est un fluide pour machines à travailler les métaux, une huile de coupe, un système de refroidissement par eau, une formulation cosmétique, une peinture, ou un agent de formation d'un film.
